Europäisches Patentamt

European Patent Office

Office européen des brevets

(19)

(11) **EP 1 555 783 A2**

(12) **EUROPEAN PATENT APPLICATION**

(43) Date of publication:
**20.07.2005 Bulletin 2005/29**

(51) Int Cl.[7]: **H04L 25/02**, H04L 5/02

(21) Application number: **05000838.2**

(22) Date of filing: **17.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **16.01.2004 KR 2004003459**

(71) Applicants:
 • **Samsung Electronics Co., Ltd.**
  **Suwon-si, Gyeonggi-do (KR)**
 • **Yonsei University**
  **Seoul (KR)**

(72) Inventors:
 • **Cho, Young-Bo**
  **Seodaemun-gu Seoul (KR)**

 • **Hong, Dae-Sik**
  **Seodaemun-gu Seoul (KR)**
 • **Ro, Sang-Min**
  **Seodaemun-gu Seoul (KR)**
 • **Hwang, Chan-Soo**
  **Yeongtong-gu Suwon-si Gyeonggi-do (KR)**
 • **Chung, Jae-Hak**
  **Yeongtong-gu Suwon-si Gyeonggi-do (KR)**

(74) Representative: **Grünecker, Kinkeldey,**
  **Stockmair & Schwanhäusser Anwaltssozietät**
  **Maximilianstrasse 58**
  **80538 München (DE)**

(54) **Pilot-based channel estimation method for MC-CDMA system using frequency interleaving**

(57)    A channel estimation method in a wireless communication system based on multicarrier-code division multiple access (MC-CDMA) using frequency interleaving. A transmitter generates transmission symbols using a pilot signal (P) and an inverted pilot signal (-P) according to subcarriers on which spread symbols generated from a spectrum spreading operation are sent, performs an interleaving operation for the transmission symbols in a frequency domain, and transmits a result of the interleaving operation. A receiver extracts the pilot signal (P) and inverted pilot signal (-P) included in the transmission symbols and performs channel estimation.

| | USER A | USER B |
|---|---|---|
| 1 | $(a_1 - a_2)^* 1$ | $(b_1 - b_2)^* 1$ |
| 2 | $(a_2 - a_1)^* 1$ | $(b_2 - b_1)^* 1$ |
| 3 | $(a_1 + a_2)^* 1$ | $(b_1 + b_2)^* -1$ |
| 4 | $(a_2 + a_1)^* 1$ | $(b_2 + b_1)^* -1$ |
| 5 | $(a_1 - a_2)^* -1$ | $(b_1 - b_2)^* 1$ |
| 6 | $(a_2 - a_1)^* -1$ | $(b_2 - b_1)^* 1$ |
| 7 | $(a_1 + a_2)^* -1$ | $(b_1 + b_2)^* -1$ |
| 8 | $(a_2 + a_1)^* -1$ | $(b_2 + b_1)^* -1$ |

FIG.5

**Description**

The present invention relates to a mobile communication system, and more particularly to a pilot-based channel estimation method for a multicarrier-code division multiple access (MC-CDMA) system using frequency interleaving.

High-speed, high-quality data transmission is required to support multimedia services of improved quality in the next generation mobile communication. Recently, research on multicarrier-code division multiple access (MC-CDMA) as a technique for satisfying this requirement is being conducted.

The MC-CDMA is based on an orthogonal frequency division multiplexing (OFDM) technique and a code division multiple access (CDMA) technique. The OFDM reduces performance degradation due to a frequency selective fading channel at the time of wideband transmission by transmitting data on narrowband subcarriers that are orthogonal to one another. Moreover, the OFDM can address a problem of inter-symbol interference (ISI) due to multipath fading by means of guard interval insertion.

Because the CDMA technique discriminates between users based on the orthogonal spreading codes, it has an advantage in view of system capabilities as compared with a frequency division multiple access (FDMA) or a time division multiple access (TDMA) technique.

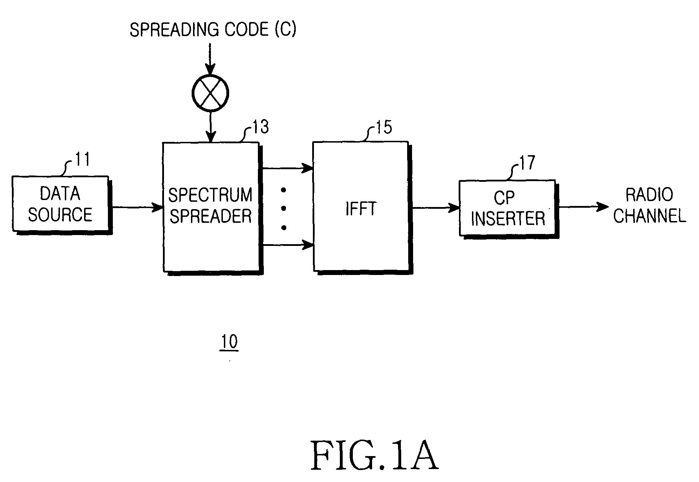

FIG. 1A is a block diagram illustrating a transmitter of the conventional MC-CDMA system. The transmitter 10 of the conventional MC-CDMA system includes a spectrum spreader 13 for multiplying a data symbol s, output from a data source 11, by a spreading code C; an inverse fast Fourier transform (IFFT) processor 15 for performing an IFFT operation for spread symbols output from the spectrum spreader 13; and a cyclic prefix (CP) inserter 17 for inserting a guard interval represented by a CP between orthogonal frequency division multiplexing (OFDM) symbols outputted from the IFFT processor 15.

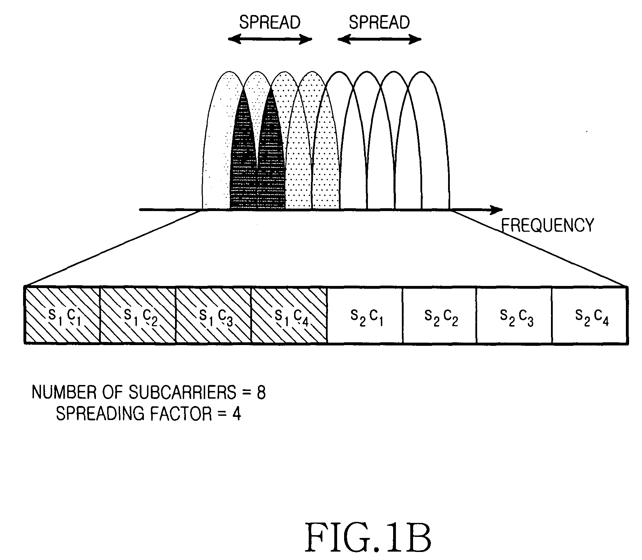

FIG. 1B is an example of transmission signals in the system shown in FIG. 1A where the number of subcarriers is 8, a spreading factor is 4 and the number of symbols is 2. In FIG. 1B, it can be seen that two transmission symbols are spread by spreading codes in a frequency domain.

On the other hand, an MC-CDMA system using frequency interleaving (FI) can achieve excellent performance as compared with the conventional MC-CDMA system because the MC-CDMA system using FI can acquire frequency diversity by transmitting spread signals through equivalently spaced subcarriers.

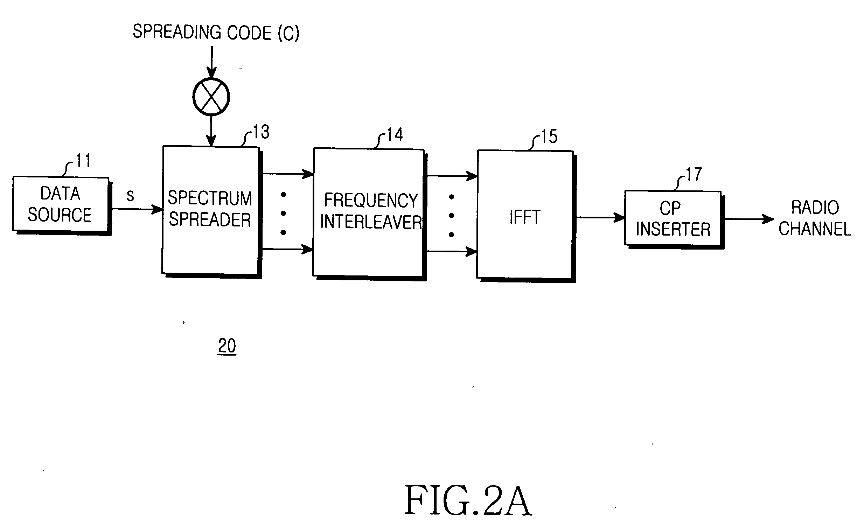

FIG. 2A is a block diagram illustrating a transmitter of the MC-CDMA system using the FI. When the transmitter 20 of the MC-CDMA system using the FI shown in FIG. 2A is compared with the transmitter 10 of the MC-CDMA system shown in FIG. 1A, it can be seen that the transmitter 20 of the MC-CDMA system using the FI further includes a frequency interleaver 14 for performing an interleaving operation before the IFFT operation is performed.

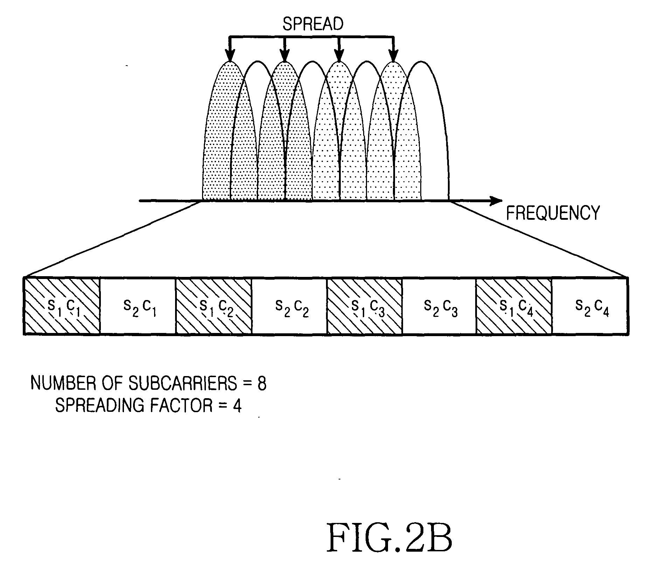

FIG. 2B is an example of transmission signals in the MC-CDMA system using the FI shown in FIG. 2A where the number of subcarriers is 8 and a spreading factor is 4. In FIG. 2B, it can be seen that transmission signals are spread while maintaining orthogonality between the signals in a frequency domain and the spread transmission signals are sent through the subcarriers.

However, where a pilot-based channel estimation method is applied to the MC-CDMA system using the FI, pilot symbols are also interleaved and only a channel estimation value corresponding to a mean value between independent channels is acquired, such that channel estimation cannot be appropriately carried out.

Therefore, the present invention has been developed in view of the above problems.

It is the object of the present invention to provide a pilot channel-based channel estimation method for a multicarrier-code division multiple access (MC-CDMA) system using frequency interleaving.

This object is solved by the subject matter of the independent claims.

Preferred embodiments are defined in the dependent claims.

It is an aspect of the present invention to provide a channel estimation method that does not need to vary a pilot transmission pattern according to channel environment variation by applying pilot channel-based channel estimation to a multicarrier-code division multiple access (MC-CDMA) system using frequency interleaving.

It is yet another aspect of the present invention to provide a channel estimation method capable of reducing a transmission rate loss caused by a pilot subcarrier by reducing a fading correlation between parallel sequences through frequency interleaving and simultaneously inserting a pilot signal between data symbols.

In accordance with one aspect of the present invention, the above can be accomplished by the provision of a channel estimation method in a wireless communication system based on a multicarrier-code division multiple access (MC-CDMA) system, comprising the steps of: generating and transmitting by a transmitter transmission symbols using a pilot signal (P) and an inverted pilot signal (-P) according to subcarriers on which spread symbols generated from a spectrum spreading operation are sent; and channel estimating in a receiver using the pilot signal (P) and the inverted pilot signal (-P) included in the transmission symbols.

In accordance with another aspect of the present invention, the above can be accomplished by the provision of a pilot transmitting method in a wireless communication system based on a multicarrier-code division multiple access (MC-CDMA) system, the system channel estimating using at least one pilot signal, the pilot transmitting method comprising the steps of: encoding at least two data symbols input for consecutive symbol durations and generating the two encoded symbols; generating spread symbols by multiplying the two encoded symbols by a spreading code; and generating and transmitting transmission symbols using a pilot signal (P) and an inverted pilot signal (-P) according to subcarriers on which the spread symbols are sent.

In accordance with yet another aspect of the present invention, the above can be accomplished by the provision of a channel estimation method in a wireless communication system based on a multicarrier-code division multiple access (MC-CDMA) system using frequency interleaving, comprising the steps of: generating transmission symbols using a pilot signal (P) and an inverted pilot signal (-P) according to subcarriers on which spread symbols generated from a spectrum spreading operation are sent; interleaving the transmission symbols in a frequency domain and transmitting a result of the interleaving operation; and extracting at a receiver the pilot signal (P) included in the transmission symbols and to carry out channel estimation.

The above object and other aspects, features and advantages of the present invention will be more clearly understood from the following detailed description taken in conjunction with the accompanying drawings, in which:

FIG. 1A is a block diagram illustrating a transmitter of a conventional multicarrier-code division multiple access (MC-CDMA) system;

FIG. 1B is an example of transmission signals in the system shown in FIG. 1A;

FIG. 2A is a block diagram illustrating a transmitter of the MC-CDMA system using the FI;

FIG. 2B is an example of transmission signals in the MC-CDMA system using the FI shown in FIG. 2A;

FIG. 3A is a block diagram illustrating a transmitter of a multicarrier-code division multiple access (MC-CDMA) system using frequency interleaving (FI) to which a channel estimation method is applied in accordance with a preferred embodiment of the present invention;

FIG. 3B is an example of transmission signals in the system shown in FIG. 3A;

FIG. 4A is a diagram illustrating an averaging process for channels estimated by the channel estimation method in accordance with a preferred embodiment of the present invention;

FIG. 4B is a diagram illustrating a process for removing a pilot signal from a received signal;

FIG. 5 is a diagram illustrating a process for despreading a received signal by a spreading code and detecting a transmission signal;

FIG. 6 is a graph illustrating performance comparison between the channel estimation method of the present invention and the conventional channel estimation method depending upon a bit error rate (BER) based on a mobile velocity; and

FIG. 7 is a graph illustrating performance comparison between the channel estimation method of the present invention and the conventional channel estimation method depending upon an average BER in a state in which a value of Eb/No, a speed and the number of multipaths are given.

Now, a channel estimation method in accordance with preferred embodiments of the present invention will be described in detail with reference to the annexed drawings.

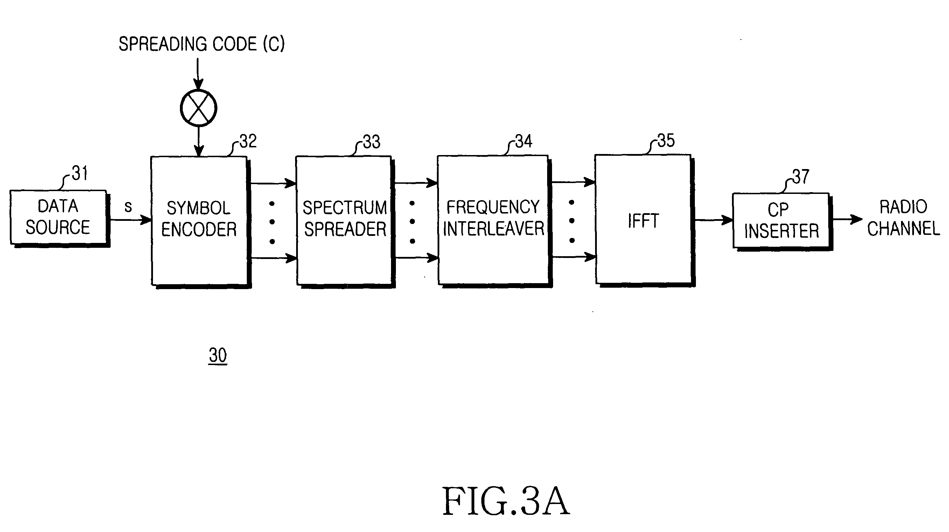

FIG. 3A is a block diagram illustrating a transmitter of a multicarrier-code division multiple access (MC-CDMA) system using frequency interleaving (FI) in accordance with a preferred embodiment of the present invention.

In FIG. 3A, the transmitter 30 of the MC-CDMA system includes a data source 31; a symbol encoder 32 for symbol encoding a data symbol s output from the data source 31; a spectrum spreader 33 for multiplying a result of the encoding operation from the symbol encoder 32 by a spreading code C; a frequency interleaver 34 for frequency interleaving spread symbols output from the spectrum spreader 33; an inverse fast Fourier transform (IFFT) processor 35 for IFFT transforming the interleaved spread symbols; and a cyclic prefix (CP) inserter 37 for inserting a guard interval represented by a CP between orthogonal frequency division multiplexing (OFDM) symbols from the IFFT processor 35.

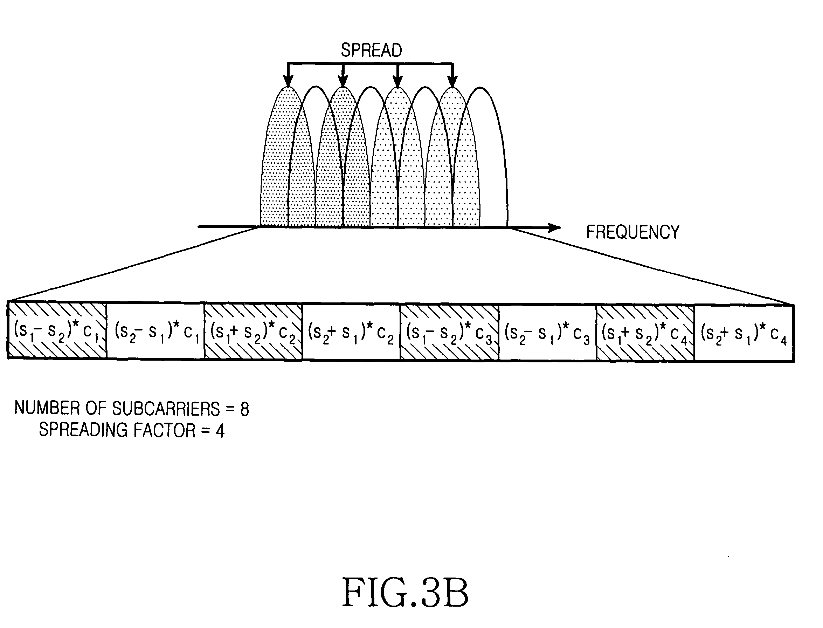

FIG. 3B shows an example of transmission signals in the system shown in FIG. 3A where the number of subcarriers is 8 and a spreading factor is 4. The transmission signals shown in FIG. 3B are similar to transmission signals of the MC-CDMA system using frequency interleaving. However, it can be seen that the transmission signals shown in FIG. 3B have undergone a symbol encoding operation.

The signals inputted into the IFFT processor 35 after symbol encoding in FIG. 3A can be expressed as the following Table 1.

Table 1

| Subcarrier | Pilot | User a | User b |
|---|---|---|---|
| 1 | P | $(a_1-a_2)*1$ | $(b_1-b_2)*1$ |

Table 1 (continued)

| Subcarrier | Pilot | User a | User b |
|---|---|---|---|
| 2 | P | $(a_2-a_1)*1$ | $(b_2-b_1)*1$ |
| 3 | P | $(a_1+a_2)*1$ | $(b_1+b_2)*-1$ |
| 4 | -P | $(a_2+a_1)*1$ | $(b_2+b_1)*-1$ |
| 5 | P | $(a_1-a_2)*-1$ | $(b_1-b_2)*1$ |
| 6 | P | $(a_2-a1)*-1$ | $(b_2-b_1)*1$ |
| 7 | P | $(a_1+a_2)*-1$ | $(b_1+b_2)*-1$ |
| 8 | -P | $(a_2+a_1)*-1$ | $(b_2+b_1)*-1$ |

In the above Table 1, there is shown an example of two transmission signals where the number of users is 2, the total number of subcarriers (Nc) is 8, a spreading factor (SF) is 4, and the number of transmission symbols (M) is 2.

In the above Table 1, "$a_i$" denotes the i-th transmission symbol of the user a and "$b_i$" denotes the I-th transmission symbol of the user b. Moreover, a spreading code {1, 1, -1, -1} is assigned to the user a, and a spreading code {1, -1, 1, -1} is assigned to the user b. "P" denotes a pilot signal. As described above, the encoded transmission signals are converted into OFDM symbols by the IFFT processor 35 after the frequency interleaver 34 performs its a frequency interleaving. After a guard interval is inserted between the OFDM symbols, a result of the insertion is transmitted through a radio channel.

Upon receiving the OFDM symbols transmitted as described above, a receiver (not shown) estimates channels using two consecutive subcarriers. A pilot signal is produced from signals received through subcarriers 1 and 2 and signals received through subcarriers 5 and 6 by means of a summing operation. On the other hand, a pilot signal is produced from signals received through subcarriers 3 and 4 and signals received through subcarriers 7 and 8 by means of a subtraction operation. Channel responses in two consecutive subcarriers are the same as each other and are denoted by $H_n$.

Where the summing operation is carried out for a signal "$H_1 * (P + a_1 - a_2 + b_1 - b_2)$" received through the subcarrier 1 or 5 and a signal "$H_1 * (P + a_2 - a_1 + b_2 - b_1)$" received through the subcarrier 2 or 6 as shown in the following Equation (1), user signals are removed and hence only "$H_1 * 2P$" remains.

$$H_1 * (P + a_1 - a_2 + b_1 - b_2) + H_1 * (P + a_2 - a_1 + b_2 - b_1) = H_1 * 2P \tag{1}$$

On the other hand, where the subtraction operation is carried out for a signal "$H_3 * (P + a_1 + a_2 + b_1 + b_2)$" received through the subcarrier 3 or 7 and a signal "$H_3 * (-P + a_1 + a_2 + b_1 + b_2)$" received through the subcarrier 4 or 8 as shown in the following Equation (2), user signals are removed and hence only "$H_3 * 2P$" remains.

$$H_3 * (P + a_1 + a_2 + b_1 + b_2) - H_3 * (-P + a_1 + a_2 + b_1 + b_2) = H_3 * 2P \tag{2}$$

The channel response $H_n$ can be estimated by dividing a value $H_n * 2P$ produced by the above Equations (1) and (2) by 2P.

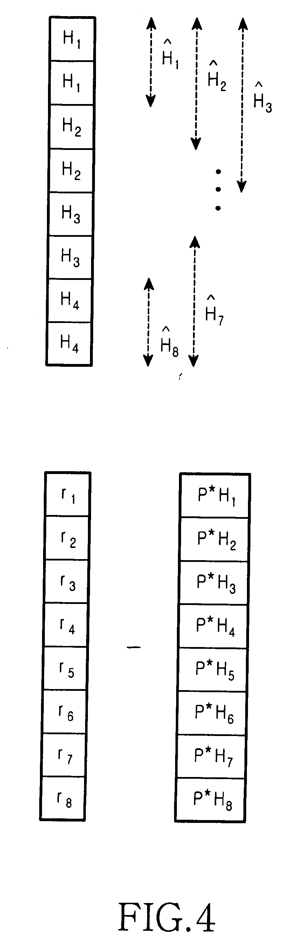

In order for the effect of noise to be reduced, an averaging operation is performed for values of the estimated channel responses as shown in FIG. 4A, such that the reliability of channel estimation is improved. A process for removing a pilot signal is performed so that the effect of an interference component can be avoided when a transmission signal is detected as shown in FIG. 4B.

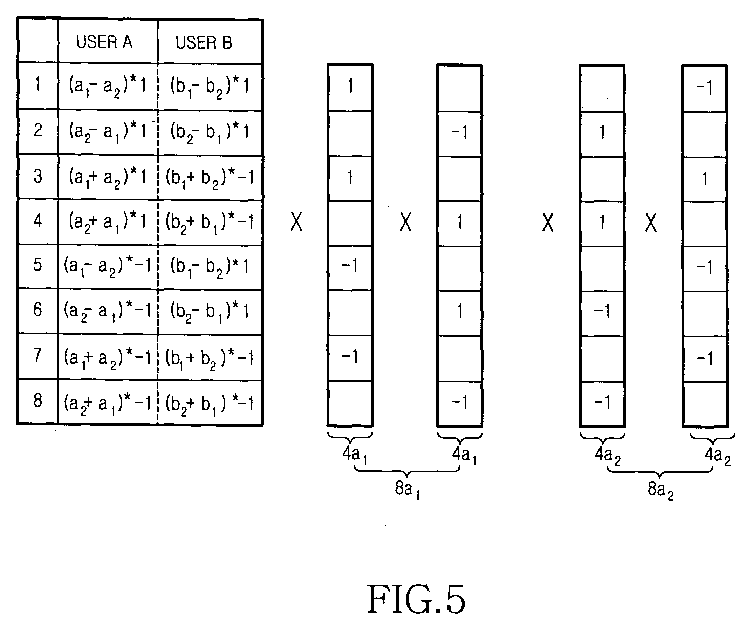

FIG. 5 is a diagram illustrating a transmission signal detection process after the channel estimation is performed. The 1st symbol $a_1$ of the user a is detected when the signals received through the subcarriers 1, 3, 5 and 7 are despread by a spreading signal {1, 1, -1, -1}. Moreover, the 2nd symbol $a_2$ of the user a is detected when the signals received through the subcarriers 2, 4, 6 and 8 are despread by the spreading signal {1, 1, -1, -1}.

Because information of the 1st symbol $a_1$ is included in the subcarriers 2, 4, 6 and 8, the 1st symbol $a_1$ of the user a can be produced when the signals received through the subcarriers 2, 4, 6 and 8 are despread by a corrected spreading signal {-1, 1, 1, -1}. Actually, a despreading operation can be performed in a range twice as large as a spreading factor (SF) used by the transmitter. The corrected spreading signal can be acquired by performing an inversion operation for odd place values in an original spreading signal. The transmission signals of the user b can be detected using the method for detecting the transmission signals of the user a.

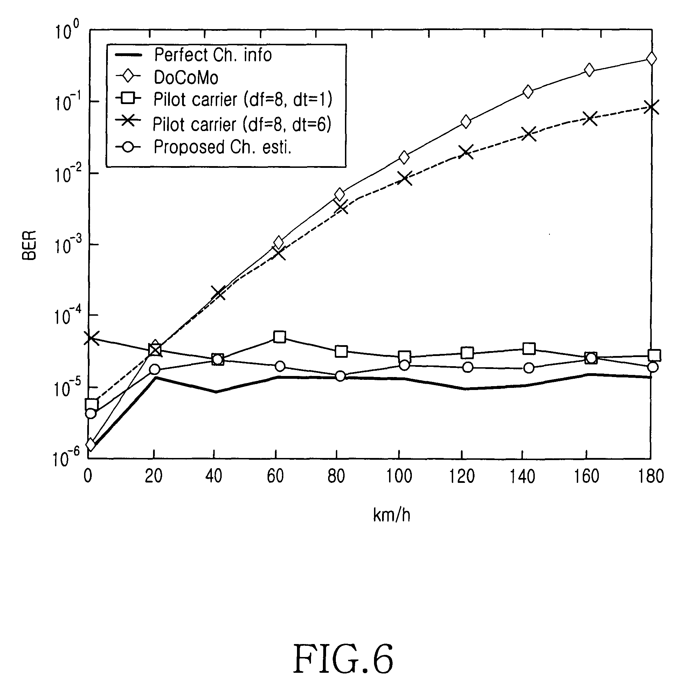

FIG. 6 is a graph illustrating bit error rates (BERs) based on a mobile velocity of a mobile terminal in a channel estimation mechanism of the present invention and conventional channel estimation mechanisms where one user uses a maximum ratio combining (MRC) mechanism in a Rayleigh fading channel environment having four multipaths.

Parameters used in the performance comparison experimentation according to the mobile velocity variation of the mobile terminal are shown in the following Table 2.

Table 2

| Parameter | Value |
|---|---|
| Number of subcarriers (Nc) | 1024 |
| Spreading factor (SF) | 16 |
| Modulation scheme | QPSK |
| Number of users | 1, 7 |
| Channel environment | Rayleigh fading channel |
| Combing mechanism | MRC, MMSEC |

In FIG. 6, "Perfect Ch. info." denotes a BER when it is assumed that a receiver recognizes correct channel state information. "DoCoMo" denotes a BER when a channel estimation mechanism is applied on the basis of a subcarrier transmitting only a pilot signal in a total frequency band during a conventional pilot packet interval. "Pilot carrier" denotes a BER when the conventional channel estimation mechanism based on a general pilot subcarrier is applied. "Proposed Ch. esti." denotes a BER when a channel estimation mechanism of the present invention is applied. In FIG. 6, "df" and "dt" denote the pilot spacing in the frequency domain and the pilot interval in the time domain, respectively.

As shown in FIG. 6, it can be seen that channel performance is degraded in a fast Doppler environment as the mechanism associated with "DoCoMo" averages pilot signals transmitted for a plurality of intervals to estimate channel state information. Similarly, it can be seen that channel performance is degraded in the fast Doppler environment if the mechanism associated with "Pilot carrier" cannot maintain a proper pilot pattern based on a coherence time and a coherence frequency, or in an environment having an increased number of multi-paths. On the other hand, it can be seen that the channel estimation mechanism associated with "Proposed Ch. esti." in accordance with the present invention can carry out a correct channel estimation operation without varying a pilot pattern, irrespective of channel environment variation.

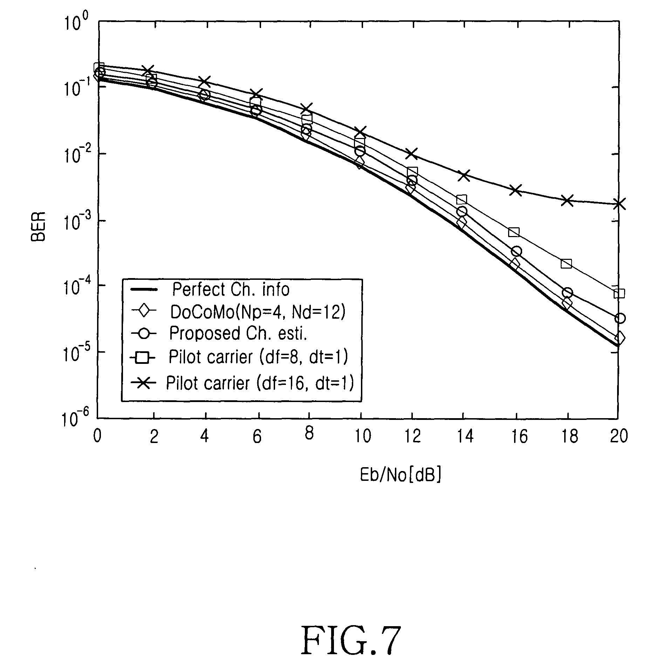

FIG. 7 is a graph illustrating a mean bit error rate (BER) based on Eb/No where 7 users use a minimum mean square error combining (MMSEC) mechanism in the Rayleigh fading channel environment having 25 multipaths and a mobile velocity of 3 km/h.

The channel estimation mechanism of the present invention and the mechanism associated with "DoCoMo" have similar performance where the correct channel state information is recognized. However, where a pilot pattern is out of a coherence frequency range, it can be seen that the performance of the mechanism associated with "Pilot carrier" is degraded.

As described above, the channel estimation method based on a pilot channel in accordance with the present invention performs a more accurate channel estimation operation in the MC-CDMA system using frequency interleaving.

The pilot channel estimation method in accordance with the present invention does not need to vary a pattern according to a coherence bandwidth and coherence time, and can perform a reliable channel estimation operation because a trade off relationship between channel estimation correction and transmission rate loss is not present.

The channel estimation method in accordance with the present invention can perform a channel estimation operation on a symbol-by-symbol basis, and can finely estimate a frequency domain's channel as a basic unit of two subcarriers.

Moreover, the channel estimation method in accordance with the present invention can be applied to an MC-CDMA system using frequency interleaving and an MC-CDMA system without frequency interleaving through a modification of the present invention.

Although the preferred embodiments of the present invention have been disclosed for illustrative purposes, those skilled in the art will appreciate that various modifications, additions and substitutions are possible, without departing from the scope of the invention.

## Claims

**1.** A channel estimation method in a wireless communication system based on multicarrier-code division multiple access, comprising the steps of:

transmitting, at a transmitter, a plurality of transmission symbols generated by multiplying spectrum spread symbols by a pilot signal P and an inverse pilot signal -P according to subcarriers on which the spread symbols are to be carried; and
estimating, at a receiver, channels using the pilot signal P and the inverse pilot signal -P included in the transmission symbols.

2. The channel estimation method of claim 1, wherein transmitting the transmission symbols, comprises the steps of:

generating coded symbols by encoding at least two data symbols; and
generating the spread symbols by multiplying the coded symbols by a spreading code.

3. The channel estimation method of claim 2, wherein the transmission symbols are designed in such a manner that a value obtained by summing or subtracting two transmission symbols, to be transmitted on two contiguous subcarriers, is equal to twice the pilot signal.

4. The channel estimation method of claim 1 or 2, wherein estimating channels, comprises the steps of:

summing signals received through two contiguous subcarriers; and
dividing the summing result by a value twice as great as the pilot signal.

5. The channel estimation method of claim 1 or 2, wherein estimating the channels comprises the steps of:

subtracting signals received through two contiguous subcarriers; and
dividing a result of the subtraction by a value 2P twice as great as the pilot signal.

6. The channel estimation method according to one of claims 1 to 5, further comprising the step of interleaving the transmission symbols in a frequency domain.

7. A method for transmitting pilot signals used for channel estimation in a wireless communication system based on multicarrier-code division multiple access, the method comprising the steps of:

generating two coded symbols by encoding at least two data symbols consecutively input;
generating spread symbols by multiplying the two coded symbols by a spreading code; and
generating transmission symbols by multiplying a pilot signal P and an inverse pilot signal -P according to subcarriers on which the spread symbols are to be carried.

8. The method of claim 7, wherein generating the coded symbols comprises the steps of:

generating a first coded symbol by subtracting a first data symbol and a second data symbol;
generating a second coded symbol by adding the first and second data symbols.

9. The method of claim 8, wherein the spread symbols are generated by multiplying each of the first and second coded symbols by four chips of a spreading code assigned to a specific user.

10. The method of claim 9, wherein the spread symbols are interleaved in a frequency domain.

11. The method of claim 10, wherein the transmission symbols are designed such that a value obtained by summing or subtracting two transmission symbols, to be transmitted on two contiguous subcarrier, is equal to twice the pilot signal.

12. A channel estimation method in a wireless communication system based on multicarrier-code division multiple access adopting frequency interleaving, comprising the steps of:

generating, at a transmitter, transmission symbols by multiplying spectrum spread symbols by a pilot signal P and an inverse pilot signal -P according to subcarriers on which the spread symbols are to be carried;
interleaving the transmission signals;
transmitting the transmission signals after interleaving; and
estimating, at a receiver, channels using the pilot signal P and the inverse pilot signal -P extracted from the transmission signals.

13. The channel estimation method of claim 12, wherein generating the transmission symbols comprises the steps of:

generating coded symbols by encoding at least two data symbols; and
generating the spread symbols by multiplying the coded symbols by a user-specific spreading code.

14. The channel estimation method of claim 13, wherein interleaving the transmission signal is performed such that a value obtained by summing or subtracting two transmission symbols to be transmitted on two contiguous subcarriers is equal to twice the pilot signal.

15. The channel estimation method of claim 14, wherein estimating the channels comprises the steps of:

adding or subtracting signals received through a pair of subcarriers; and
dividing a result of the addition or subtraction by a value twice the pilot signal.

SPREADING CODE (C)

FIG.1A

SPREAD     SPREAD

FREQUENCY

| $S_1 C_1$ | $S_1 C_2$ | $S_1 C_3$ | $S_1 C_4$ | $S_2 C_1$ | $S_2 C_2$ | $S_2 C_3$ | $S_2 C_4$ |
|---|---|---|---|---|---|---|---|

NUMBER OF SUBCARRIERS = 8
SPREADING FACTOR = 4

# FIG.1B

EP 1 555 783 A2

SPREADING CODE (C)

DATA SOURCE 11 — s → SPECTRUM SPREADER 13 — ⋮ → FREQUENCY INTERLEAVER 14 — ⋮ → IFFT 15 → CP INSERTER 17 → RADIO CHANNEL

20

# FIG.2A

FIG.2B

NUMBER OF SUBCARRIERS = 8
SPREADING FACTOR = 4

FIG.3A

EP 1 555 783 A2

SPREAD

FREQUENCY

| $(s_1- s_2)^* c_1$ | $(s_2- s_1)^* c_1$ | $(s_1+ s_2)^* c_2$ | $(s_2+ s_1)^* c_2$ | $(s_1- s_2)^* c_3$ | $(s_2- s_1)^* c_3$ | $(s_1+ s_2)^* c_4$ | $(s_2+ s_1)^* c_4$ |

NUMBER OF SUBCARRIERS = 8
SPREADING FACTOR = 4

FIG.3B

FIG.4

| | USER A | USER B |
|---|---|---|
| 1 | $(a_1 - a_2)*1$ | $(b_1 - b_2)*1$ |
| 2 | $(a_2 - a_1)*1$ | $(b_2 - b_1)*1$ |
| 3 | $(a_1 + a_2)*1$ | $(b_1 + b_2)*-1$ |
| 4 | $(a_2 + a_1)*1$ | $(b_2 + b_1)*-1$ |
| 5 | $(a_1 - a_2)*-1$ | $(b_1 - b_2)*1$ |
| 6 | $(a_2 - a_1)*-1$ | $(b_2 - b_1)*1$ |
| 7 | $(a_1 + a_2)*-1$ | $(b_1 + b_2)*-1$ |
| 8 | $(a_2 + a_1)*-1$ | $(b_2 + b_1)*-1$ |

X

$\begin{bmatrix} 1 \\ \\ 1 \\ \\ -1 \\ \\ -1 \\ \end{bmatrix}$

$\underbrace{\qquad}_{4a_1}$

X

$\begin{bmatrix} \\ -1 \\ \\ 1 \\ \\ 1 \\ \\ -1 \end{bmatrix}$

$\underbrace{\qquad}_{4a_1}$

$\underbrace{\qquad\qquad}_{8a_1}$

X

$\begin{bmatrix} \\ 1 \\ \\ 1 \\ \\ -1 \\ \\ -1 \end{bmatrix}$

$\underbrace{\qquad}_{4a_2}$

X

$\begin{bmatrix} -1 \\ \\ 1 \\ \\ -1 \\ \\ -1 \\ \end{bmatrix}$

$\underbrace{\qquad}_{4a_2}$

$\underbrace{\qquad\qquad}_{8a_2}$

FIG.5

FIG.6

FIG.7